# EUROPEAN PATENT SPECIFICATION

(11) **EP 3 125 001 B1**
(45) Date of publication and mention of the grant of the patent: **17.02.2021**
(21) Application number: 15769855.6
(22) Date of filing: 03.03.2015
(51) Int. Cl.: G01V 5/00, G01N 23/04

(54) **SYSTEM AND METHOD FOR RADIATION INSPECTION ON MOVING OBJECT**
SYSTEM UND VERFAHREN ZUR STRAHLUNGSPRÜFUNG AUF EINEM BEWEGTEN OBJEKT
SYSTÈME ET PROCÉDÉ POUR INSPECTION DE RADIATION SUR UN OBJET MOBILE

(30) Priority: 24.03.2014 CN 201410111164
(43) Date of publication of application: 01.02.2017
(73) Proprietor: Powerscan Company Limited, Beijing 100011 (CN)
(72) Inventor: WANG, Shaofeng, Beijing 100011 (CN); YAN, Xiong, Beijing 100011 (CN); CAO, Yanfeng, Beijing 100011 (CN); HU, Xiaowei, Beijing 100011 (CN)
(74) Representative: Grünecker Patent- und Rechtsanwälte PartG mbB
(86) International application number: PCT/CN2015/073551
(87) International publication number: WO 2015/143971

(56) References cited:
- EP-A2- 2 275 839
- WO-A2-2012/106730
- CN-A- 101 162 209
- CN-A- 101 163 369
- CN-A- 103 149 599
- CN-U- 202 896 596
- CN-Y- 200 986 555
- RO-A0- 127 852

## Description

### TECHNICAL FIELD

The present invention relates to a technical field of radiation scanning, and specifically to a system and a method for radiation inspection on a moving object.

### BACKGROUND OF THE INVENTION

Nowadays, utilizing high energy radiation for automatic scanning inspection on an object moving with high speed, such as a running vehicle, can accomplish a security check for smuggled, illegal and prohibited objects, without interrupting the passing of the vehicles with high speed and is an ideal means for performing a 100% vehicle inspection. Generally, such prior inspection system at least includes a radiation source and a matching collimator for collimating rays from the radiation source into a sector-shape beam. The prior inspection system further includes several sensors for detecting the position of the object moving in a certain direction. An array of sensors are arranged opposite to the radiation source and receive the radiation rays passing through the moving object to form a digital image by which a dangerous object may be found. An exemplary inspection system of the prior art is disclosed in the publication CN 202 896 596 U.

However, such system can only perform inspection on a moving object running in a single specific direction and cannot perform inspection on moving objects running in other directions. For application situations where the ground traffic network is complicated or there is a limited occupation space for the system, such system cannot be used. As the result, the inspection efficiency is low and the costs of apparatus and labor are increased.

### SUMMARY OF THE INVENTION

In the present invention, a system for radiation inspection on a moving object and a method for radiation inspection on a moving object are provided, and they enable radiation inspection on the moving objects running in multiple directions and enable a high working efficiency.

In the present invention, a system for radiation inspection on a moving object is provided, and it comprises: a radiation source and a radiation detector, with the radiation source emitting rays and the radiation detector collecting rays for radiation imaging, wherein the radiation source and the radiation detector are located on either side of a detection passage, respectively, and the radiation source emits the rays which are restricted within a scanning region having a first boundary plane and a second boundary plane; and the system further comprises: a plurality of detecting units arranged in sequence along a detection passage, being triggered and sending a signal when detecting that the moving object arrives or leaves; and a control module used for receiving the signal sent by the plurality of detecting units, and controlling the radiation source based on the received signal to perform radiation inspection on the moving object; wherein a first, second, and third detecting units of the plurality of detecting units are located at one side of the scanning region, and near the first boundary plane; the fourth, fifth, and sixth detecting units of the plurality of detecting units are located at the other side of the scanning region, and near the second boundary plane; bars and traffic-lights in the positions where the-first (110) and sixth (160) detecting units are located;
wherein the first, second, and third detecting units of the plurality of detecting units have respective distances L1, L2, L3 to the first boundary plane, wherein L1>L2>L3; a fourth, fifth, and sixth detecting units of the plurality of detecting units have respective distances L4, L5, L6 to the second boundary plane, wherein L4<L5<L6; and each of L2 and L5 is not less than a length of a portion of the moving object which needs to be shielded from radiation,
wherein for the moving object entering the detection passage from the first detecting unit side:
signal lights at both the sides of the detection passage are configured to be triggered to prevent another moving object from entering when a front end of the moving object arrives al the first detecting unit;
a first bar at the first detecting unit is configured to be triggered to be put down when a rear end of the moving object leaves the first detecting unit;
the radiation source is configured to be triggered to emit rays when the front end of the moving object arrives at the fifth detecting unit;
the radiation source is configured to be triggered to stop emitting rays when the rear end of the moving object leaves the fourth detecting unit; and
the system is configured to be switched to a ready slate when the rear end of the moving object leaves the sixth detecting unit; and
for the moving object enters the detection passage from the sixth detecting unit side;
the signal lights at both sides of the detection passage are configured to be triggered to prevent another moving object from entering when a front end of the moving object arrives at the sixth detecting unit;
the second bar at the sixth detecting unit is configured to be triggered to be put down when a rear end of the moving object leaves the sixth detecting unit;
the radiation source is configured to be triggered to emit rays when the front end of the moving object arrives at the second detecting unit;
the radiation source is configured to be triggered to stop emitting rays when the rear end of the moving object leaves the third detecting unit; and
the system is configured to be switched to a ready state when the rear end of the moving object leaves the first detecting unit;
wherein the second and fifth detecting unit comprises several sensors arranged along the passage and spaced apart from one another.

Preferably, each of L3 and L4 has a value range of [0.1, 1], in meters.

Preferably, each of L2 and L5 has a value range of [1, 3], in meters.

Preferably, the control module is further used for comparing a moving speed of the moving object with a preset threshold, and terminating the radiation inspection process when the moving speed is less than the preset threshold.

Preferably, in the position of the inlet of the detection passage, a traffic light and/or a movable bar are/is installed.

Preferably, in the position of the outlet of the detection passage, a traffic light and/or a movable bar are/is installed.

Preferably, after the control module receives the signal, the control module records a time point T1 at which the fourth or third detecting unit of the plurality of detecting units is triggered; the control module records a time point T2 at which the fifth or second detecting unit of the plurality of detecting units is triggered; and the control module calculates a moving speed of the moving object, wherein the speed value V = (L2-L3)/(T2-T1) or V = (L5-L4)/(T2-T1); when V is less than a preset threshold, the radiation inspection process is terminated; otherwise, after the fifth or second detecting unit of the plurality of detecting units detects that the moving object arrives, the radiation source is controlled to start emitting rays.

Preferably, when a time interval between time points at which any two adjacent detecting units of the plurality of detecting units are triggered, respectively, is larger than a preset time interval, the control module terminates the radiation inspection process.

Preferably, when the system comprises a traffic light and a movable bar, after the first or sixth detecting unit of the plurality of detecting units detects that the moving object enters the detection passage, the control module controls all the traffic lights to turn red and controls the movable bar at the inlet to be closed; after the sixth or first detecting unit of the plurality of detecting units detects that the moving object leaves the detection passage, the control module controls all the traffic lights and the movable bar to return to their ready states.

Preferably, when the system is in the ready state, all the traffic lights are green and all the movable bars are kept open.

Preferably, when the system is in the ready state, all the traffic lights are red and all the movable bars are kept closed; when the first or sixth detecting unit of the plurality of detecting units detects that the moving object arrives, the control module controls all the traffic lights to turn green and controls all the movable bars to be opened.

Preferably, when the system is in the ready state, all the traffic lights are red and all the movable bars are kept closed; when the first and sixth detecting units of the plurality of detecting units simultaneously detect that the moving object arrives, as a priority, the control modules controls the traffic light at the inlet where the first detecting unit inlet is located, to turn green and controls the movable bar to be opened.

Preferably, when the system is in the ready state, the traffic light at the inlet where the first detecting unit is located, is green and the movable bar is kept open; meanwhile, the traffic light at the inlet where the sixth detecting unit is located, is red and the movable bar is kept closed.

In another aspect, in the present invention, a method for radiation inspection on a moving object is further provided, and it comprises the following and other sub steps according to the features of claim 7: step 1: the first or sixth detecting unit of the plurality of detecting units, when detecting that the moving object arrives, sending a signal to the control module; step 2: the control module, after receiving the signal and after the fifth or second detecting unit of the plurality of detecting units detects that the moving object arrives, controlling the radiation source to start emitting rays; step 3: after the third or fourth detecting unit of the plurality of detecting units detects that the moving object leaves, the control module controlling the radiation source to stop emitting rays.

### DESCRIPTION OF THE DRAWINGS

Figure 1 is a schematic structural diagram of a system for radiation inspection according to an embodiment of the present invention.
Figure 2 is a flow chart of a method for radiation inspection according to the embodiment of Figure 1.
Figure 3 is a flow chart of another method for radiation inspection according to the embodiment of Figure 1.
Figure 4 is a schematic diagram illustrating the shifting of working states of the radiation inspection according to the embodiment of Figure 1.
Figure 5 is a schematic structural diagram of a system for radiation inspection according to an embodiment of the present invention.
Figure 6 is a flow chart of a method for radiation inspection according to the embodiment of Figure 5.
Figures 7 and 8 are schematic structural diagrams of systems for radiation inspection according to embodiments of the present invention.

### DESCRIPTION OF EXEMPLARY EMBODIMENTS

Hereinafter, the technical solutions of the present invention will be described in detail in connection with specific embodiments and with reference to the accompanying drawings.

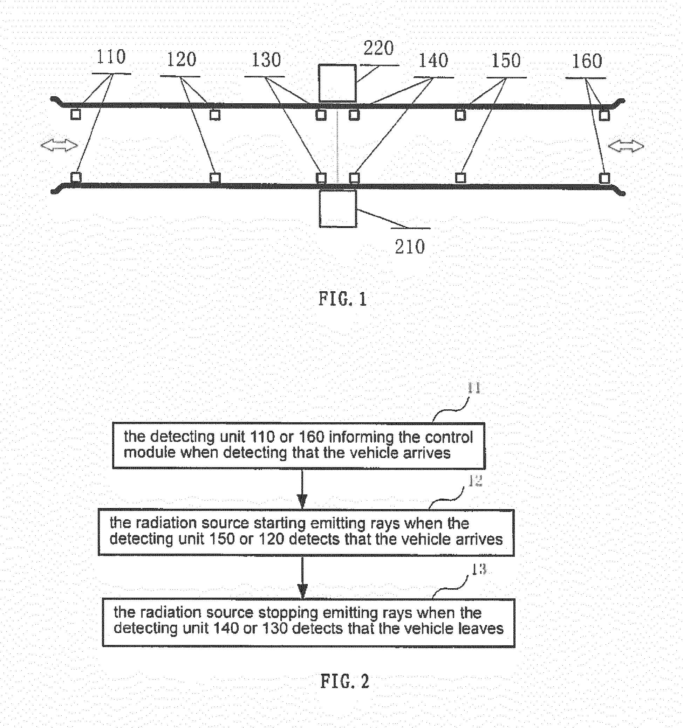

Figure 1 is a schematic structural diagram of a system for radiation inspection according to an embodiment of the present invention, wherein a ray source 210 and an array type detector 220 for rays are located on either side of a detection passage, respectively. When a moving object (such as a vehicle) is passing by, the ray source 210 emits scanning rays, the detector 220 receives the ray(s) having passed through the object and converts the ray(s) into respective digital values, an imaging system (not shown in the Figure) processes the digital values and can then form a digital radiation image, thereby completing the radiation scanning security check process. During scanning, the rays from the radiation source are collimated by a collimator and are restricted within a scanning region. Any object beyond the scanning region will not be irradiated by the rays. Regarding the scanning region, it refers to a spatial region occupied by emitting rays from the radiation source 210. In order to prevent radiation to any person by accident, the range of the scanning region may be adjusted according to practical requirements.

In the embodiment of Figure 1, the detecting units 110, 120, 130, 140, 150, 160 arranged in sequence along the scanning detection passage are the detecting units having different distances from the ray source, for detecting arrival or leaving of the moving object. These detecting units may be a photoelectric switch, a light screen, a ground sense coil, an axle load sensor, etc., or may be a combination of these sensors. These detecting units may be arranged above the ground of the scanning passage, or may be arranged below the ground of the scanning passage.

In the embodiment, the detecting units 110 and 160 are located at two ends of the detection passage, respectively. They may detect whether a moving object (such as a vehicle) is coming, whether the moving object has been completely in the detection passage, whether the moving object has exited the detection passage. As shown in Figure 1, if the vehicle enters the passage from the left end, the left end is the inlet and the right end is the outlet; otherwise, if the vehicle enters from the right end, the right end is the inlet and the left end is the outlet.

In the embodiment, the detecting units 120 and 150 are located in the scanning passage, on either side of the scanning region, respectively, and are each spaced apart from the scanning region by a distance that depends on the length of a portion of the moving object which needs to be shielded from radiation. For example, for a vehicle, the portion which needs to be shielded from radiation is the driving cab in which the driver is seated, and the distance of each of the detecting units 120 and 150 to a boundary of the scanning region should be not less than the length of the portion of the driving cab.

In the embodiment, it is configured such that the detecting units 120 and 150 are spaced apart from the scanning region by certain distances. That is, it is configured such that the detecting unit 120 is spaced apart from the left boundary (i.e. a vertical plane perpendicular to the paper plane in fact) of the scanning region by a certain distance and the detecting unit 150 is spaced apart from the right boundary of the scanning region by a certain distance, and specifically a distance of 1-3 meters would be appropriate. The distance from the detecting unit 120 to the left boundary of the scanning region and the distance from the detecting unit 150 to the right boundary of the scanning region may be the same or may be different.

In some embodiment(s) of the present invention, the detecting unit 120 or 150 comprises several sensors arranged along the passage and spaced apart from one another. Each sensor may be independently considered as the detecting unit 120 or 150 for use, for the purpose of detecting and determining the portion which needs to be shielded from radiation, in various types of moving objects, and avoiding exposure of said portion under radiation. For example, for radiation inspection on various types of vehicles, it is necessary to avoid the driving cab in which the driver is seated. The arranged several sensors are spaced apart from one another by a distance, and thus can detect not only the driving cab of the type of truck vehicles having relatively large volume, but also the driving cab of the type of cars having relatively small volume, thereby enabling 100% radiation avoidance for the driving cab and the driver therein.

In some embodiment(s) of the present invention, the detecting units 130 and 140 are located on either side of the scanning region, respectively, in positions near the scanning region. For example, the detecting unit 130 is spaced apart from the left boundary of the scanning region by a distance of 0.1-1 meter, and the detecting unit 140 is spaced apart from the right boundary of the scanning region by a distance of 0.1-1 meter. These two distances may be the same or may be different. The detecting units 130 and 140 can detect whether the moving object has left the scanning region, and inform the control system to immediately stop ray emitting from the ray source, thereby reducing unnecessary ray irradiation.

In some embodiment(s) of the present invention, in positions near the detecting units 110 and 160, a bar and a traffic light (not shown in Figure 1) is are arranged to restrict running of the moving object and to prevent irrelevant moving object from entering the scanning passage.

Figure 2 is a flow chart of a method for radiation inspection on a moving object according to an embodiment of the present invention. Referring to Figure 1, in inspection, the vehicle may enter the passage from the left, or may enter the passage from the right. When the automatic inspection system is in a "ready" state, the bars in the positions where the detecting units 110 and 160 are located, are in an open state and the traffic lights are green. Taking a case in which the vehicle enters the scanning passage from the left, as an example, the vehicle first reaches the detecting unit 110 and triggers the detecting unit 110, and then the traffic lights in the positions of the detecting units 110 and 160 are turned red; when the detecting unit 110 detects that the vehicle has completely enters the scanning passage, the bar in the position of the detecting unit 110 is put down to prevent any subsequent vehicle from entering by accident; then the vehicle reaches the detecting units 120, 130, 140 in sequence (at this moment, the radiation source does not emit rays), and when the vehicle reaches the detecting unit 150, it can be determined that the vehicle driving cab portion which needs avoidance has passed the scanning region and the vehicle carriage portion to be inspected has entered the scanning region; at this moment, the control system, after receiving the signal indicating the triggering of the detecting unit 150, controls the ray source to emit rays to scan the vehicle carriage for inspection; in this process, the vehicle continues running forward, and when the tail of the vehicle leaves the scanning region, the detecting unit 140 detects that the vehicle leaves the scanning region; the control system, after receiving the signal from the detecting unit 140, immediately controls the ray source to stop emitting rays, thereby reducing unnecessary ray irradiation; then the vehicle leaves the detecting units 150 and 160 in sequence; when the detecting unit 160 detects that the vehicle has left, the control system, according to the signal from the detecting unit 160, switches the inspection system to the ready state, turns the traffic lights at the two ends of the passage green and opens all the bars at the two ends.

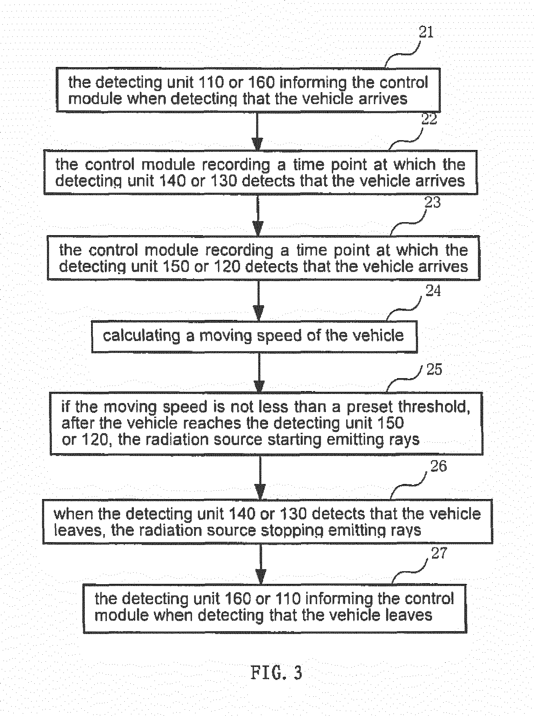

During radiation scanning to the moving object, if the moving speed of the object is too low, it is inappropriate to activate radiation scanning. For this reason, during automatic inspection of the present invention, a vehicle speed detecting mechanism may be further provided. Referring to Figure 3, also taking the case in which the vehicle enters the detection passage from the left, as an example, after the detecting unit 110 is triggered by the vehicle, the control system also records the time points at which the vehicle reaches the detecting units 140 and 150. As the distance between the detecting units 140 and 150 is known, according to this distance and a difference between time points at which the vehicle reaches the detecting units 140 and 150, the speed of the vehicle carriage (excluding the driving cab portion) at which it passes through the scanning region thus can be calculated. When the control system detects the speed of the moving object, it judges, based on this speed, whether to control the ray source to emit rays for scanning the moving object. If the speed of the moving object is too low, such as lower than 3km/h, it is difficult to avoid radiation to persons and the radiation scanning should not be performed in this case. The process should be terminated and other manners may be selected to complete the security check. Otherwise, if the speed of the moving object is sufficiently high, such as not less than 3km/h, the ray source may be activated for scanning inspection. In different application situations, it is possible to set vehicle speed thresholds suitable for activating radiation scanning according to practical requirements.

In some embodiment(s) of the present invention, the imaging system may, according to the vehicle speed detected by the control system, perform image correction in the running direction of the vehicle to the obtained scanning image, thereby reducing image deformation that is caused due to the change in vehicle speed.

Hereinafter, the case(s) in which the vehicle enters the scanning passage from the right in Figure 1 will be described. When 160 detects that the vehicle arrives, the traffic lights in the positions of the detecting units 110 and 160 are turned red; when 160 detects that the vehicle leaves, the bar in the position of the detecting unit 160 is put down to prevent any subsequent vehicle from entering by accident; the vehicle reaches the detecting units 150, 140, 130 in sequence, and when the vehicle reaches the detecting unit 150, it can be determined that the vehicle head which needs avoidance has passed the scanning region and the vehicle carriage to be inspected has entered the scanning region; the control system, after receiving the signal from the detecting unit 120, based on the time points at which the vehicle reaches the detecting units 120 and 130, calculates the running speed, and if the speed meets the requirement(s), it controls the ray source to emit rays to scan the vehicle carriage for inspection; the vehicle continues to run forward, and when the vehicle leaves the scanning region, the detecting unit 130 detects that the vehicle leaves its position; the control system, after receiving the signal from 130, controls the ray source to stop emitting rays, thereby reducing unnecessary ray irradiation; the vehicle leaves the detecting units 120 and 110 in sequence; when the detecting unit 110 detects that the vehicle leaves its position, the control system, according to the signal from the detecting unit 110, switches the inspection system to the ready state, turns the traffic lights at the two ends of the passage green and opens the bars at the two ends.

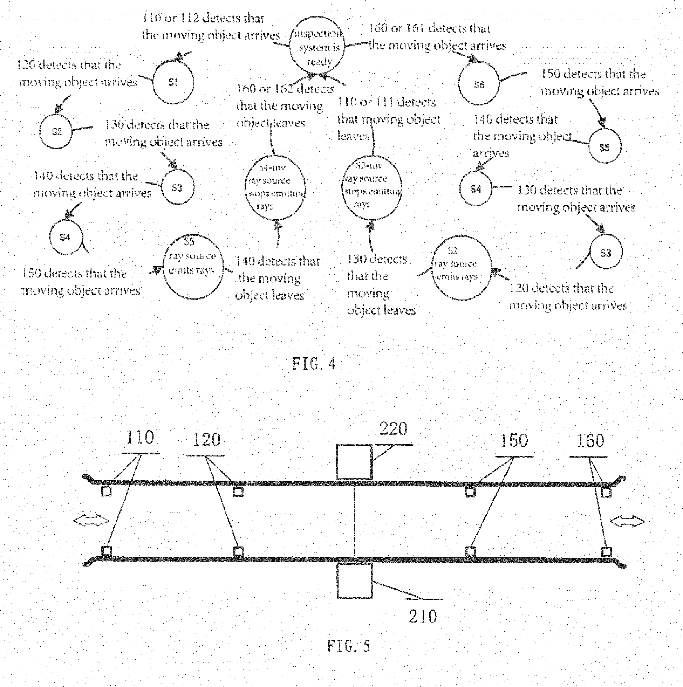

Figure 4 is a schematic diagram illustrating the shifting of working states of the radiation inspection based on the embodiment of Figure 1. It can be seen that after the radiation inspection system is in the ready state, only when the respective sensors are triggered in sequence according to the specific order and the moving speed of the object meets the requirement, can the ray source be activated, thereby ensuring that the system can properly avoid the portion which needs avoidance and activate the scanning inspection on the portion which needs inspection.

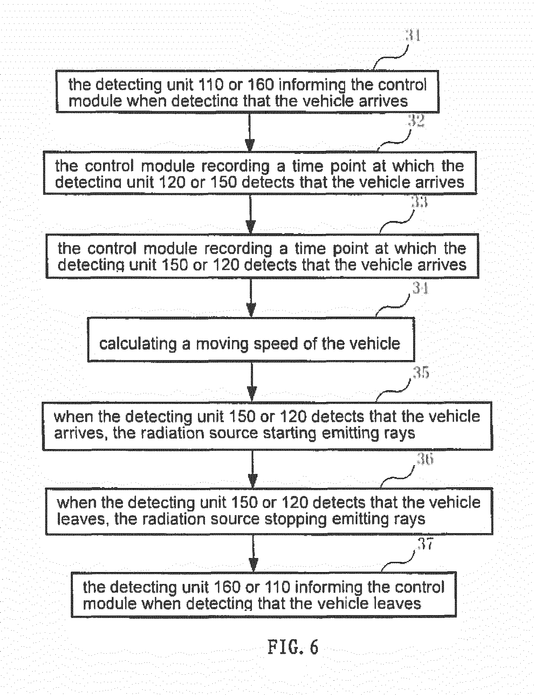

Figure 5 is a structural diagram of a system for radiation inspection according to an example which does not form part of the claimed invention. The example of Figure 5 differs from the embodiment of Figure 1 in that in the example of Figure 5, the detecting units 130 and 140 used in the embodiment of Figure 1 are omitted, and as an alternative, the detection previously performed by the detecting unit 130 is performed by the detecting unit 120 and the detection previously performed by the detecting unit 140 is performed by the detecting unit 150, thereby providing signals needed in the scanning inspection process to the control system. Figure 6 is a flow chart for performing a scanning task by the system for radiation inspection according to the example of Figure 5.

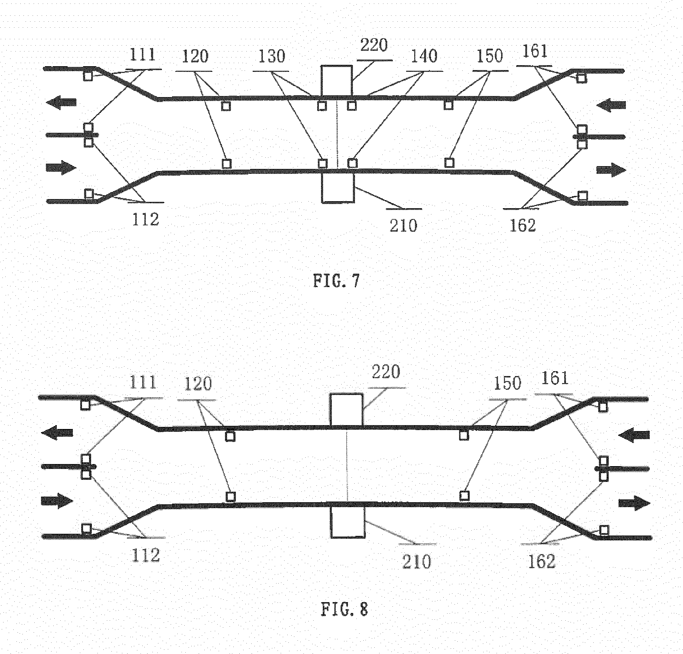

In some embodiment(s) of the present invention, in order to handle the complicated situations of the ground traffic network, the automatic inspection system may be attached to several roads in different directions in the ground traffic. Figure 7 shows a situation where at each end of the inspection passage, there are two roads. Compared with the embodiment of Figure 1, in the embodiment of Figure 7, the vehicles running in different directions are separated such that the entering and exiting vehicles do not share the same inlet or outlet any more. Instead, a vehicle enters the inspection passage via a specific inlet and then leaves via a specific outlet, thereby facilitating scheduling and controlling the vehicles under inspection running in different directions. In the same way, the inspection system in the example of Figure 5 may be attached to the road in a manner as shown in Figure 8.

In the embodiments of Figure 7 and Figure 8, with more inlets and outlets, there will be more detecting units at the inlets and the outlets accordingly, wherein the previous detecting unit 110 is replaced by the detecting units 111 and 112, the previous detecting unit 160 is replaced by the detecting units 161 and 162, and the configuration of other detecting units is unchanged. In addition, as to the configuration of the bars and the traffic lights, they may be disposed at all inlets and outlets, or the bars and the traffic lights may be disposed only at the inlets where the detecting units 112 and 161 are located.

In some embodiment(s) of the present invention, the control system may set a maximum time difference between time points at which adjacent detecting units are triggered in sequence, such as 15s. If the difference between time points of two adjacent detecting units being triggered is larger than the set value, the control system stops the inspection process and re-switches the inspection system to the ready state, so as to prevent the inspection system from being in the activated state for a long time due to accidental triggering of the detecting unit(s) or due to other faults.

In the embodiments of Figure 7 and Figure 8, radiation inspection can be carried out on the vehicle no matter which direction the vehicle is running in. For example, in a direction, the moving object enters from the detecting unit 112 and then leaves from the detecting unit 162; while in another direction, the moving object enters from the detecting unit 161 and then leaves from the detecting unit 111. The inspection system is generally arranged in a compact manner and occupies a relatively small space.

In the radiation inspection, when the automatic inspection system is in the ready state, the bars at the positions of the detecting units 112 and 161 are open and the traffic lights at the positions of the detecting units 112 and 161 are green. When 112 detects that the vehicle arrives, the traffic lights at the positions of the detecting units 112 and 161 are turned red and the bar at the position of the detecting unit 161 is put down; when 112 detects that the vehicle leaves, the bar at the position of the detecting unit 112 is put down to prevent any subsequent vehicle from entering by accident; the vehicle reaches 120, 130, 140 in sequence and when the vehicle reaches the detecting unit 150, it can be determined that the vehicle head which needs avoidance has passed the scanning region and the vehicle carriage portion to be inspected has entered the scanning region; provided that the vehicle running speed is larger than the preset value, the ray source is controlled to immediately emit rays to scan the vehicle carriage for inspection; the vehicle continues to run forward, and when the vehicle leaves the scanning region, the detecting unit 140 detects that the vehicle leaves its position; the control system, after receiving the signal from 140, immediately controls the ray source to stop emitting rays, thereby reducing unnecessary ray irradiation; the vehicle leaves the detecting units 150 and 162 in sequence; when the detecting unit 162 detects that the vehicle leaves, the control system, according to the signal from 162, switches the inspection system to the ready state, turns the traffic lights at the two ends of the passage green and opens all the bars at the two ends.

In the same way, when the detecting unit 161 detects that the vehicle arrives, the traffic lights at the positions of the detecting units 112 and 161 are turned red and the bar at the position of 112 is put down; when the detecting unit 161 detects that the vehicle leaves, the bar at the position of the detecting unit 161 is put down to prevent any subsequent vehicle from entering by accident; the vehicle reaches 150, 140, 130 in sequence, when the vehicle reaches 120, it can be determined that the vehicle head which needs avoidance has passed the scanning region and the vehicle carriage to be inspected enters the scanning region; provided that the vehicle running speed is larger than the preset value, the ray source is controlled to immediately emit rays to scan the vehicle carriage for inspection; the vehicle continues to run forward, and when the vehicle leaves the scanning region, the detecting unit 130 detects that the vehicle leaves its position; the control system, after receiving the signal from the detecting unit 130, immediately controls the ray source to stop emitting rays, thereby reducing unnecessary ray irradiation; the vehicle leaves the detecting units 120 and 111 in sequence; when the detecting unit 111 detects that the vehicle leaves, the control system, according to the signal from the detecting unit 111, switches the inspection system to the ready state, turns the traffic lights at the two ends of the passage green and opens all the bars at the two ends.

In some embodiment(s) of the present invention, when the automatic inspection system is in the ready state, all the bars are put down. Only when the detecting units 110, 112, 160, 161 detect that the moving object arrives, can the bar corresponding to the running direction of the moving object be opened.

In some embodiment(s) of the present invention, in radiation inspection, when the automatic inspection system is in the ready state, the bars at the positions of the detecting units 112 and 161 are put down and the traffic lights at the positions of the detecting units 112 and 161 are red. When the detecting units detect that the moving object arrives, the control system or an operation person, according to the traffic flow condition in the two running directions, selectively opens a bar in one of the two running directions, allowing the object moving in that running direction to enter for scanning inspection. When the object moving in that running direction leaves the inspection system, the control system or an operation person, according to the traffic flow condition in the two directions, selectively opens a bar in one of the two running directions, allowing a next moving object to enter for scanning inspection.

In some embodiment(s) of the present invention, a priority inspection mechanism may be configured for the inspection system. When the inspection system is in the ready state, the bar of the passage in one running direction is configured to keep open (with the traffic light being green), while bar of the passage in another running direction is configured to keep closed (with the traffic light being red). Therefore, when there are vehicles in both directions waiting for inspection, as a priority, the vehicle on the side where the bar is open may first enters the inspection passage for scanning inspection. For example, the direction from left to right in Figure 5 may be selected as the priority inspection direction. Therefore, when the system is ready, the bar at the position of the detecting unit 112 is open while the bar at the position of the detecting unit 161 is in the closed state; also, the traffic light at the position of the detecting unit 112 is green while the traffic light at the position of the detecting unit 161 is red. When there are vehicles coming in both directions, the vehicle on the side of the detecting unit 112 may directly enter the inspection passage while the vehicle on the side of the detecting unit 161 cannot enter. When the vehicle enters the scanning passage from the side of the detecting unit 112, the traffic light in the position where the detecting unit 112 is located is turned red, and when the vehicle leaves the position of the detecting unit 112, the bar in the position where the detecting unit 112 is located, is put down. After the vehicle leaves the position of the detecting unit 162 after the scanning inspection, the system is recovered to the previous ready state. Thereafter, if the detecting unit 161 detects that a vehicle arrives, the bar at the detecting unit 161 is opened and the traffic light is turned green; at the same time, the bar at the detecting unit 112 is closed and the traffic light is turned red; the vehicle enters from the side of the detecting unit 161. In addition, in a similar process, the direction from right to left may be configured as the priority entering direction for inspection.

In the embodiment(s) of the present invention, the plurality of detecting units are reasonably arranged, and the radiation controlling process during inspection on the moving object(s) is designed accordingly. With the embodiment(s) of the present invention, the moving objects coming from different directions in the ground traffic network may be scanned for inspection, thereby enabling a high efficiency of security check, effectively avoiding the portion(s) that needs to be shielded from radiation during inspection, preventing the object running with a relatively low speed from being put under radiation scanning and thus ensuring personnel safety.

Hereinbefore, the technical solutions of the present invention are described in detail in connection with specific embodiments. The specific embodiments as described are used to facilitate understanding of the concept of the present invention.

## Claims

1. A system for radiation inspection on a moving object, comprising: a radiation source (210) and a radiation detector (220), with the radiation source emitting rays and the radiation detector collecting rays for radiation imaging, wherein,
the radiation source emits the rays which are restricted within a scanning region having a first boundary plane and a second boundary plane; and the system further comprises:
a plurality of detecting units (110, 120, 130, 140, 150, 160) arranged in sequence along a detection passage, for sending a signal when detecting that the moving object arrives or leaves; and
a control module used for receiving the signal sent by the plurality of detecting units, and controlling the radiation source based on the received signal to perform radiation inspection on the moving object; wherein
a first, second, and third detecting units (110, 120, 130) of the plurality of detecting units are located at one side of the scanning region, and near the first boundary plane;
a fourth, fifth, and sixth detecting units (140, 150, 160) of the plurality of detecting units are located at the other side of the scanning region, and near the second boundary plane;
bars and traffic lights in the positions where the first (110) and sixth (160) detecting units are located;
wherein,
the first, second, and third detecting units of the plurality of detecting units have respective distances L1, L2, L3 to the first boundary plane, wherein L1 >L2>L3;
the fourth, fifth, and sixth detecting units of the plurality of detecting units have respective distances L4, L5, L6 to the second boundary plane, wherein L4<L5<L6; and
each of L2 and L5 is not less than a length of a portion of the moving object which needs to be shielded from radiation;
wherein, for the moving object entering the detection passage from the first detecting unit (110) side:
signal lights at both the sides of the detection passage are configured to be triggered to prevent another moving object from entering when a front end of the moving object arrives at the first detecting unit (110);
a first bar at the first detecting unit (110) is configured to be triggered to be put down when a rear end of the moving object leaves the first detecting unit (110);
the radiation source is configured to be triggered to emit rays when the front end of the moving object arrives at the fifth detecting unit (150);
the radiation source is configured to be triggered to stop emitting rays when the rear end of the moving object leaves the fourth detecting unit (140); and
the system is configured to be switched to a ready state when the rear end of the moving object leaves the sixth detecting unit (160); and
for the moving object enters the detection passage from the sixth detecting unit (160) side:
the signal lights at both sides of the detection passage are configured to be triggered to prevent another moving object from entering when a front end of the moving object arrives at the sixth detecting unit (160);
a second bar at the sixth detecting unit (160) is configured to be triggered to be put down when a rear end of the moving object leaves the sixth detecting unit (160);
the radiation source is configured to be triggered to emit rays when the front end of the moving object arrives at the second detecting unit (120);
the radiation source is configured to be triggered to stop emitting rays when the rear end of the moving object leaves the third detecting unit (130); and
the system is configured to be switched to a ready state when the rear end of the moving object leaves the first detecting unit (110);
wherein the second (120) and fifth (150) detecting unit comprise several sensors arranged along the passage and spaced apart from one another.

2. The system for radiation inspection on the moving object according to claim 1, wherein the control module is further used for comparing a moving speed of the moving object with a preset threshold, and terminating the radiation inspection process when the moving speed is less than the preset threshold.

3. The system for radiation inspection on the moving object according to claim 2, wherein the preset threshold is 3 km/hour.

4. The system for radiation inspection on the moving object according to claim 1, wherein the detection passage has one or more inlets and has one or more outlets.

5. The system for radiation inspection on the moving object according to claim 4, wherein in the position of the inlet of the detection passage, a traffic light and/or a movable bar are/is installed.

6. The system for radiation inspection on the moving object according to claim 4, wherein in the position of the outlet of the detection passage, a traffic light and/or a movable bar are/is installed.

7. A method for radiation inspection on a moving object, using any one of the system according to claims 1-6, wherein the method comprises:
step①: the first (110) or sixth (160) detecting unit of the plurality of detecting units (110, 120, 130, 140, 150, 160), when detecting that the moving object arrives, sending a signal to the control module to trigger signal lights at both sides of the detection passage to prevent another moving object from entering;
step 1a: upon a rear end of the moving object leaves the first (110) or sixth (160) detecting unit, triggering a first bar at the first detecting unit (110) or a second bar at the sixth (160) detecting unit respectively to be put down;
step②: the control module, after receiving the signal and the fifth (150) or second (120) detecting unit of the plurality of detecting units detecting that the moving object arrives, controlling the radiation source to start emitting rays;
step③: after the fourth (140) or third (130) detecting unit of the plurality of detecting units detects that the moving object leaves, controlling the radiation source to stop emitting rays.
step 3a: switching the system to a ready state when the rear end of the moving object leaves the sixth (160) or first (110) detecting unit.

8. The method according to claim 7, wherein in the step②, after the control module receives the signal, the method further comprises:
the control module recording a time point T1 at which the fourth or third detecting unit of the plurality of detecting units is triggered;
the control module recording a time point T2 at which the fifth or second detecting unit of the plurality of detecting units is triggered;
the control module calculating a moving speed of the moving object, wherein the speed value V=(L2-L3)/(T2-T1) or V=(L5-L4)/(T2-T1); and
when V is less than a preset threshold, terminating the radiation inspection process; otherwise, after the fifth or second detecting unit of the plurality of detecting units detects that the moving object arrives, controlling the radiation source to start emitting rays.

9. The method according to claim 7, wherein the method further comprises:
when a time interval between time points at which any two adjacent detecting units of the plurality of detecting units are triggered, respectively, is larger than a preset time interval, the control module terminating the radiation inspection process.

10. The method according to claim 9, wherein the preset time interval is 15 seconds.

11. The method according to claim 7, wherein when both a traffic light and a movable bar are installed in the positions of the inlet and the outlet of the detection passage, the method further comprises:
after the first or sixth detecting unit (110, 160) detects that the moving object enters the detection passage, turning all the traffic lights red and closing the movable bar at the inlet;
after the sixth or first detecting unit detects that the moving object leaves the detection passage, all the traffic lights and the movable bar returning to their ready states.

12. The method according to claim 11, wherein when the system is in the ready state, all the traffic lights are green and all the movable bars are kept open.

13. The method according to claim 11, wherein when the system is in the ready state, all the traffic lights are red and all the movable bars are kept closed;
when the first or sixth detecting unit (110, 160) detects that the moving object is to enter the detection passage, all the traffic lights are turned green and all the movable bars are opened.

14. The method according to claim 11, wherein when the system is in the ready state, all the traffic lights are red and all the movable bars are kept closed;
when the first and sixth detecting units (110, 160) detect simultaneously that the moving object is to enter the detection passage, as a priority, a traffic light near the first detecting unit is made green and a movable bar near the first detecting unit is made open.

15. The method according to claim 11, wherein when the system is in the ready state, a traffic light near the first detecting unit is green and the movable bar is kept open, meanwhile, a traffic light near the sixth detecting unit is red and the movable bar is kept closed.

## Patentansprüche

1. System zur Strahlungsprüfung an einem beweglichen Objekt, umfassend: eine Strahlungsquelle (210) und einen Strahlungsdetektor (220), wobei die Strahlungsquelle Strahlen aussendet und der Strahlungsdetektor Strahlen zur Strahlungsbildgebung sammelt, wobei die Strahlungsquelle die Strahlen ausstrahlt, die auf einen Abtastbereich mit einer ersten Grenzebene und einer zweiten Grenzebene beschränkt sind; und das System ferner umfasst:
eine Vielzahl von Erfassungseinheiten (110, 120, 130, 140, 150, 160), angeordnet der Reihe nach entlang einer Erfassungspassage, zum Senden eines Signals beim Erfassen, dass das bewegliche Objekt ankommt oder den Ort verlässt, und
ein zum Empfangen des von der Vielzahl von Erfassungseinheiten gesendeten Signals und Steuern der Strahlungsquelle auf der Basis des empfangenen Signals zum Durchführen der Strahlungsprüfung am beweglichen Objekt verwendetes Steuermodul; wobei
eine erste, zweite und dritte Erfassungseinheit (110, 120, 130) der Vielzahl von Erfassungseinheiten an einer Seite des Abtastbereichs und nahe der ersten Grenzebene angeordnet ist;
eine vierte, fünfte und sechste Erfassungseinheit (140, 150, 160) der Vielzahl von Erfassungseinheiten an der anderen Seite des Abtastbereichs und nahe der zweiten Grenzebene angeordnet ist;
Schranken und Ampeln an den Positionen, an denen erste (110) und sechste (160) Erfassungseinheit angeordnet sind; wobei
die erste, zweite und dritte Erfassungseinheit der Vielzahl von Erfassungseinheiten jeweilige Abstände L1, L2, L3 zur ersten Grenzebene aufweisen, wobei L1>L2>L3;
die vierte, fünfte und sechste Erfassungseinheit der Vielzahl von Erfassungseinheiten jeweilige Abstände L4, L5, L6 zur zweiten Grenzebene aufweisen, wobei L4<L5<L6; und
und jeder von L2 und L5 nicht kleiner ist als eine Länge eines Teils des beweglichen Objekts, das vor Strahlung abgeschirmt werden muss;
wobei beim Eintritt des beweglichen Objekts in die Erfassungspassage von der Seite der ersten Erfassungseinheit (110):
Signallampen an beiden Seiten der Erfassungspassage ausgebildet sind, ausgelöst zu werden, um zu verhindern, dass ein anderes bewegliches Objekt eindringt, wenn ein vorderes Ende des beweglichen Objekts an der ersten Erfassungseinheit (110) ankommt;
eine erste Schranke an der ersten Erfassungseinheit (110) ausgebildet ist, ausgelöst zu werden, um nach unten bewegt zu werden, wenn ein hinteres Ende des beweglichen Objekts die erste Erfassungseinheit (110) verlässt;
die Strahlungsquelle ausgebildet ist, ausgelöst zu werden, um Strahlen auszusenden, wenn das vordere Ende des beweglichen Objekts an der fünften Erfassungseinheit (150) ankommt;
die Strahlungsquelle ausgebildet ist, ausgelöst zu werden, um das Aussenden von Strahlen zu stoppen, wenn das hintere Ende des beweglichen Objekts die vierte Erfassungseinheit (140) verlässt; und
das System ausgebildet ist, in einen Bereitschaftszustand geschaltet zu werden, wenn das hintere Ende des beweglichen Objekts die sechste Erfassungseinheit (160) verlässt; und
wobei beim Eintritt des beweglichen Objekts in die Erfassungspassage von der Seite der sechsten Erfassungseinheit (160):
die Signallampen an beiden Seiten der Erfassungspassage ausgebildet sind, ausgelöst zu werden, um zu verhindern, dass ein anderes bewegliches Objekt eindringt, wenn ein vorderes Ende des beweglichen Objekts an der sechsten Erfassungseinheit (160) ankommt;
eine zweite Schranke an der sechsten Erfassungseinheit (160) ausgebildet ist, ausgelöst zu werden, um nach unten bewegt zu werden, wenn ein hinteres Ende des beweglichen Objekts die sechste Erfassungseinheit (160) verlässt;
die Strahlungsquelle ausgebildet ist, ausgelöst zu werden, um Strahlen auszusenden, wenn das vordere Ende des beweglichen Objekts an der zweiten Erfassungseinheit (120) ankommt;
die Strahlungsquelle ausgebildet ist, ausgelöst zu werden, um das Aussenden von Strahlen zu stoppen, wenn das hintere Ende des beweglichen Objekts die dritte Erfassungseinheit (130) verlässt; und
das System ausgebildet ist, in einen Bereitschaftszustand geschaltet zu werden, wenn das hintere Ende des beweglichen Objekts die erste Erfassungseinheit (110) verlässt;
wobei die zweite (120) und fünfte (150) Erfassungseinheit mehrere entlang der Passage angeordnete und zueinander beabstandete Sensoren umfassen.

2. System zur Strahlungsprüfung am beweglichen Objekt nach Anspruch 1, wobei das Steuermodul ferner zum Vergleichen einer Bewegungsgeschwindigkeit des beweglichen Objekts mit einer vorgegebenen Schwelle und Beenden des Strahlungsprüfprozesses, wenn die Bewegungsgeschwindigkeit niedriger ist als die vorgegebene Schwelle, verwendet wird.

3. System zur Strahlungsprüfung am beweglichen Objekt nach Anspruch 2, wobei die vorgegebene Schwelle 3 km/Stunde beträgt.

4. System zur Strahlungsprüfung am beweglichen Objekt nach Anspruch 1, wobei die Erfassungspassage einen oder mehrere Eingänge aufweist und einen oder mehrere Ausgänge aufweist.

5. System zur Strahlungsprüfung am beweglichen Objekt nach Anspruch 4, wobei in der Position des Eingangs der Erfassungspassage eine Ampel und/oder eine bewegliche Schranke installiert ist/sind.

6. System zur Strahlungsprüfung am beweglichen Objekt nach Anspruch 4, wobei in der Position des Ausgangs der Erfassungspassage eine Ampel und/oder eine bewegliche Schranke installiert ist/sind.

7. Verfahren zur Strahlungsprüfung an einem beweglichen Objekt unter Verwendung von einem der Systeme nach Anspruch 1-6, wobei das Verfahren umfasst:
Schritt 1: Senden eines Signals an das Steuermodul zum Auslösen von Ampeln an beiden Seiten der Erfassungspassage zum Verhindern des Eindringens eines anderen beweglichen Objekts durch die erste (110) oder sechste (160) Erfassungseinheit der Vielzahl von Erfassungseinheiten (110, 120, 130, 140, 150, 160) beim Erfassen, dass das bewegliche Objekt ankommt;
Schritt 1a: wenn ein hinteres Ende des beweglichen Objekts die erste (110) oder sechste (160) Erfassungseinheit verlässt, Auslösen des Bewegens jeweils einer ersten Schranke an der ersten Erfassungseinheit (110) oder einer zweiten Schranke an der sechsten (160) Erfassungseinheit nach unten;
Schritt 2: Steuern der Strahlungsquelle zum Starten des Aussendens von Strahlen durch das Steuermodul nach Empfangen des Signals und Erfassen, dass das bewegliche Objekt ankommt, durch die fünfte (150) oder zweite (120) Erfassungseinheit der Vielzahl von Erfassungseinheiten;
Schritt 3: Steuern der Strahlungsquelle zum Stoppen des Aussendens von Strahlen nach Erfassen, dass das bewegliche Objekt den Ort verlässt, durch die vierte (140) oder dritte (130) Erfassungseinheit der Vielzahl von Erfassungseinheiten.
Schritt 3a: Schalten des Systems in einen Bereitschaftszustand, wenn das hintere Ende des beweglichen Objekts die sechste (160) oder erste (110) Erfassungseinheit verlässt.

8. Verfahren nach Anspruch 7, wobei im Schritt 2, nachdem das Steuermodul das Signal empfängt, das Verfahren ferner umfasst:
Aufzeichnen eines Zeitpunkts T1, bei dem die vierte oder dritte Erfassungseinheit der Vielzahl von Erfassungseinheiten ausgelöst wird, durch das Steuermodul;
Aufzeichnen eines Zeitpunkts T2, bei dem die fünfte oder zweite Erfassungseinheit der Vielzahl von Erfassungseinheiten ausgelöst wird, durch das Steuermodul;
Berechnen einer Bewegungsgeschwindigkeit des beweglichen Objekts durch das Steuermodul, wobei V=(L2-L3)/(T2-T1) oder V=(L5-L4)/(T2-T1); und
wenn V niedriger ist als eine vorgegebene Schwelle, Beenden des Strahlungsprüfprozesses; andernfalls Steuern der Strahlungsquelle zum Starten des Aussendens von Strahlen nach Erfassen, dass das bewegliche Objekt ankommt, durch die fünfte oder zweite Erfassungseinheit der Vielzahl von Erfassungseinheiten.

9. Verfahren nach Anspruch 7, wobei das Verfahren ferner umfasst:
wenn ein Zeitintervall zwischen Zeitpunkten, an denen jeweils zwei angrenzende Erfassungseinheiten der Vielzahl von Erfassungseinheiten ausgelöst werden, größer ist als ein vorgegebenes Zeitintervall, das Beenden des Strahlungsprüfprozesses durch das Steuermodul.

10. Verfahren nach Anspruch 9, wobei das vorgegebene Zeitintervall 15 Sekunden beträgt.

11. Verfahren nach Anspruch 7, wobei, wenn sowohl eine Ampel als auch eine bewegliche Schranke an den Positionen von Eingang und Ausgang der Erfassungspassage installiert sind, das Verfahren ferner umfasst:
nachdem die erste oder sechste Erfassungseinheit (110, 160) erfasst, dass das bewegliche Objekt in die Erfassungspassage eindringt, Schalten aller Ampeln auf Rot und Schließen der beweglichen Schranke am Eingang;
nachdem die sechste oder erste Erfassungseinheit erfasst, dass das bewegliche Objekt die Erfassungspassage verlässt, Zurückkehren aller Ampeln und der beweglichen Schranke in ihre Bereitschaftszustände.

12. Verfahren nach Anspruch 11, wobei, wenn sich das System im Bereitschaftszustand befindet, alle Ampeln grün sind und alle beweglichen Schranken offengehalten werden.

13. Verfahren nach Anspruch 11, wobei, wenn sich das System im Bereitschaftszustand befindet, alle Ampeln rot sind und alle beweglichen Schranken geschlossen gehalten werden;
wenn die erste oder sechste Erfassungseinheit (110, 160) erfasst, dass das bewegliche Objekt am Eindringen in die Erfassungspassage ist, alle Ampeln auf Grün geschaltet werden und alle beweglichen Schranken geöffnet werden.

14. Verfahren nach Anspruch 11, wobei, wenn sich das System im Bereitschaftszustand befindet, alle Ampeln rot sind und alle beweglichen Schranken geschlossen gehalten werden;
wenn die erste und sechste Erfassungseinheit (110, 160) gleichzeitig erfassen, dass das bewegliche Objekt am Eindringen in die Erfassungspassage ist, als eine Priorität eine Ampel nahe der ersten Erfassungseinheit auf Grün geschaltet wird und eine bewegliche Schranke nahe der ersten Erfassungseinheit geöffnet wird.

15. Verfahren nach Anspruch 11, wobei, wenn sich das System im Bereitschaftszustand befindet, eine Ampel nahe der ersten Erfassungseinheit grün ist und die bewegliche Schranke offengehalten wird, während eine Ampel nahe der sechsten Erfassungseinheit rot ist und die bewegliche Schranke geschlossen gehalten wird.

## Revendications

1. Système pour inspection de rayonnement sur un objet mobile, comprenant : une source de rayonnement (210) et un détecteur de rayonnement (220), avec la source de rayonnement émettant des rayons et le détecteur de rayonnement collectant des rayons pour une imagerie par rayonnement, dans lequel,
la source de rayonnement émet les rayons qui sont restreints au sein d'une zone de balayage présentant un premier plan de limite et un deuxième plan de limite ; et le système comprend en outre :
une pluralité d'unités de détection (110, 120, 130, 140, 150, 160) disposées en séquence le long d'un passage de détection, pour envoyer un signal lorsqu'il est détecté que l'objet mobile arrive ou s'en va ; et
un module de contrôle utilisé pour recevoir le signal envoyé par les unités de détection, et contrôler la source de rayonnement selon le signal reçu pour procéder à une inspection de rayonnement sur l'objet mobile ;
dans lequel
des première, deuxième et troisième unités de détection (110, 120, 130) de la pluralité d'unités de détection sont placées sur un côté de la zone de balayage, et près du premier plan de limite ;
des quatrième, cinquième et sixième unités de détection (140, 150, 160) de la pluralité d'unités de détection sont placées sur l'autre côté de la zone de balayage, et près du deuxième plan de limite ;
des barrières et des feux de signalisation aux emplacements où les première (110) et sixième (160) unités de détection sont placées ;
dans lequel,
les première, deuxième et troisième unités de détection de la pluralité d'unités de détection présentent des distances respectives L1, L2, L3 au premier plan de limite, dans lequel L1 > L2 > L3 ;
les quatrième, cinquième et sixième unités de détection de la pluralité d'unités de détection présentent des distances respectives L4, L5, L6 au deuxième plan de limite, dans lequel L4 < L5 < L6 ; et
chacune de L2 et L5 est supérieure à une longueur d'une partie de l'objet mobile qui nécessite une protection contre un rayonnement ;
dans lequel, pour l'objet mobile entrant dans le passage de détection depuis le côté de première unité de détection (110) :
des feux de signalisation sur les deux côtés du passage de détection sont configurés pour se déclencher pour empêcher un autre objet mobile d'entrer lorsqu'une extrémité avant de l'objet mobile arrive au niveau de la première unité de détection (110) ;
une première barrière au niveau de la première unité de détection (110) est configurée pour se déclencher pour s'abaisser lorsqu'une extrémité arrière de l'objet mobile quitte la première unité de détection (110) ;
la source de rayonnement est configurée pour se déclencher pour émettre des rayons lorsque l'extrémité avant de l'objet mobile arrive au niveau de la cinquième unité de détection (150) ;
la source de rayonnement est configurée pour se déclencher pour cesser d'émettre des rayons lorsque l'extrémité arrière de l'objet mobile quitte la quatrième unité de détection (140) ; et
le système est configuré pour basculer vers un état prêt lorsque l'extrémité arrière de l'objet mobile quitte la sixième unité de détection (160) ; et
pour l'objet mobile entrant dans le passage de détection depuis le côté de sixième unité de détection (160) :
les feux de signalisation sur les deux côtés du passage de détection sont configurés pour se déclencher pour empêcher un autre objet mobile d'entrer lorsqu'une extrémité avant de l'objet mobile arrive au niveau de la sixième unité de détection (160) ;
une première barrière au niveau de la première unité de détection (160) est configurée pour se déclencher pour s'abaisser lorsqu'une extrémité arrière de l'objet mobile quitte la première unité de détection (160) ;
la source de rayonnement est configurée pour se déclencher pour émettre des rayons lorsque l'extrémité avant de l'objet mobile arrive au niveau de la deuxième unité de détection (120) ;
la source de rayonnement est configurée pour se déclencher pour cesser d'émettre des rayons lorsque l'extrémité arrière de l'objet mobile quitte la troisième unité de détection (130) ; et
le système est configuré pour basculer vers un état prêt lorsque l'extrémité arrière de l'objet mobile quitte la première unité de détection (110) ;
dans lequel les deuxième (120) et cinquième (150) unités de détection comprennent plusieurs capteurs disposés le long du passage et espacés les uns des autres.

2. Le système d'inspection de rayonnement de l'objet mobile selon la revendication 1, dans lequel le module de contrôle est utilisé en outre pour comparer une vitesse de déplacement de l'objet mobile à un seuil prédéfini, et terminer le processus d'inspection de rayonnement lorsque la vitesse de déplacement est inférieure au seuil prédéfini.

3. Le système d'inspection de rayonnement de l'objet mobile selon la revendication 2, dans lequel le seuil prédéfini est de 3 km/heure.

4. Le système d'inspection de rayonnement de l'objet mobile selon la revendication 1, dans lequel le passage de détection présente une ou plusieurs entrées et présente une ou plusieurs sorties.

5. Le système d'inspection de rayonnement de l'objet mobile selon la revendication 4, dans lequel à l'emplacement de l'entrée du passage de détection, un feu de signalisation et/ou une barrière mobile est/sont installé(e) (s) .

6. Le système d'inspection de rayonnement de l'objet mobile selon la revendication 4, dans lequel à l'emplacement de l'entrée du passage de détection, un feu de signalisation et/ou une barrière mobile est/sont installé(e) (s) .

7. Procédé d'inspection de rayonnement d'un objet mobile, utilisant un quelconque du système selon les revendications 1 à 6, dans lequel le procédé comprend :
Étape (1) : la première (110) ou sixième (160) unité de détection de la pluralité d'unités de détection (110, 120, 130, 140, 150, 160), lorsqu'il est détecté que l'objet mobile arrive, envoie un signal au module de contrôle pour déclencher des feux de signalisation sur les deux côtés du passage de détection pour empêcher un autre objet mobile d'entrer ;
étape la : lorsqu'une extrémité arrière de l'objet mobile quitte la première (110) ou sixième (160) unité de détection, déclenchement d'une première barrière au niveau de la première unité de détection (110) ou d'une deuxième barrière au niveau de la sixième (160) unité de détection respectivement pour s'abaisser ;
étape (2) : le module de contrôle, après réception du signal et que la cinquième (150) ou deuxième (120) unité de détection de la pluralité d'unités de détection détecte que l'objet mobile arrive, contrôle la source de rayonnement pour commencer à émettre des rayons ;
étape (3) : après que la quatrième (140) ou deuxième (130) unité de détection de la pluralité d'unités de détection détecte que l'objet mobile s'en va, contrôle de la source de rayonnement pour arrêter d'émettre des rayons ;
étape 3a : basculement du système vers un état prêt lorsque l'extrémité arrière de l'objet mobile quitte la sixième (160) ou première (110) unité de détection.

8. Le procédé selon la revendication 7, dans lequel à l'étape (2), après que le module de contrôle reçoit le signal, le procédé comprend en outre :
le module de contrôle enregistre un point temporel T1 auquel la quatrième ou troisième unité de détection de la pluralité d'unités de détection se déclenche ;
le module de contrôle enregistre un point temporel T2 auquel la cinquième ou deuxième unité de détection de la pluralité d'unités de détection se déclenche ;
le module de contrôle calcule une vitesse de déplacement de l'objet mobile, dans lequel la valeur de vitesse est V = (L2 - L3) / (T2 - T1) or V = (L5 - L4) / (T2 - T1) ; et
lorsque V est inférieure à un seuil prédéfini, terminaison du processus d'inspection de rayonnement ;
autrement, après que la cinquième ou deuxième unité de détection de la pluralité d'unités de détection détecte que l'objet mobile arrive, contrôle de la source de rayonnement pour commencer à émettre des rayons.

9. Le procédé selon la revendication 7, dans lequel le procédé comprend en outre :
lorsqu'un intervalle temporel entre des points temporels auxquels deux quelconques unités de détection adjacentes de la pluralité d'unités de détection se déclenchent, respectivement, est supérieur à un intervalle temporel prédéfini, le module de contrôle termine le processus de rayonnement.

10. Le procédé selon la revendication 9, dans lequel l'intervalle temporel prédéfini est de 15 secondes.

11. Le procédé selon la revendication 7, dans lequel lorsqu'à la fois un feu de signalisation et une barrière mobile sont installés aux emplacements de l'entrée et la sortie du passage de détection, le procédé comprend en outre :
après que la première ou sixième unité de détection (110, 160) détecte que l'objet mobile entre dans le passage de détection, activation de tous les feux de signalisation au rouge et fermeture de la barrière mobile à l'entrée ;
après que la sixième ou première unité de détection détecte que l'objet mobile quitte le passage de détection, retour de tous les feux de signalisation et de la barrière mobile à leurs états prêt.

12. Le procédé selon la revendication 11, dans lequel lorsque le système est dans l'état prêt, tous les feux de signalisation sont au vert et toutes les barrières mobiles sont maintenues ouvertes.

13. Le procédé selon la revendication 11, dans lequel lorsque le système est dans l'état prêt, tous les feux de signalisation sont au rouge et toutes les barrières mobiles sont maintenues fermées ;
lorsque la première ou sixième unité de détection (110, 160) détecte que l'objet mobile s'apprête à entrer dans le passage de détection, tous les feux de signalisation passent au vert et toutes les barrières mobiles sont ouvertes.

14. Le procédé selon la revendication 11, dans lequel lorsque le système est dans l'état prêt, tous les feux de signalisation sont au rouge et toutes les barrières mobiles sont maintenues fermées ;
lorsque les première et sixième unités de détection (110, 160) détectent simultanément que l'objet mobile s'apprête à entrer dans le passage de détection, en tant que priorité, un feu de signalisation proche de la première unité de détection passe au vert et une barrière mobile proche de la première unité de détection s'ouvre.

15. Le procédé selon la revendication 11, dans lequel lorsque le système dans l'état prêt, un feu de signalisation proche de la première unité de détection est vert et la barrière mobile est maintenue ouverte, tandis que, un feu de signalisation proche de la sixième unité de détection est rouge et la barrière mobile est maintenue fermée.
